# EUROPÄISCHE PATENTSCHRIFT

(11) **EP 1 645 838 B1**
(45) Veröffentlichungstag und Bekanntmachung des Hinweises auf die Patenterteilung: **09.07.2008**
(21) Anmeldenummer: 05010273.0
(22) Anmeldetag: 11.05.2005
(51) Int. Cl.: G01B 11/04, B07C 3/14

(54) **Vorrichtung und Verfahren zur Überwachung von bewegten Objekten**
Apparatus and method for observing moving objects
Dispositif et procédé pour surveiller des objets en motion

(30) Priorität: 11.10.2004 DE 102004049482
(43) Veröffentlichungstag der Anmeldung: 12.04.2006
(73) Patentinhaber: SICK AG, 79183 Waldkirch (DE)
(72) Erfinder: Reichenbach, Jürgen, 79312 Emmendingen (DE); Schopp, Thomas, 79112 Freiburg (DE); Pierenkemper, Hans-Werner, 79312 Emmendingen (DE)
(74) Vertreter: Manitz, Finsterwald & Partner GbR

(56) Entgegenhaltungen:
- EP-A- 0 647 479
- EP-A- 1 343 110
- EP-A- 1 431 707
- US-A- 5 311 999
- US-A1- 2003 206 305

## Beschreibung

Die Erfindung betrifft eine Vorrichtung und ein Verfahren zur Erfassung von durch das Gesichtsfeld einer Kamera bewegten Objekten mit einer Einrichtung zur Selektion von interessierenden Bereichen, die jeweils lediglich einem Teil des Gesichtfeldes der Kamera zugeordnet sind.

Bei derartigen Vorrichtungen oder Verfahren, die Kamerasysteme einsetzen, ist es oftmals nötig, die erfassten Bilddaten in Echtzeit oder zumindest mit sehr hoher Geschwindigkeit auszuwerten, was zur Folge hat, dass dem Auswertesystem eine hohe Rechenleistung zur Verfügung stehen muss, welche mit entsprechendem wirtschaftlichen Aufwand verbunden ist. Um die erforderliche Rechenleistung zu reduzieren, ist es bekannt, mittels einer Vorverarbeitungsstufe vor der eigentlichen Auswertung der erfassten Bilddaten solche Bereiche der aufgenommenen Bilder zu identifizieren, die von besonderem Interesse sind. Derartige interessierende Bereiche werden in der Regel als "Regions of Interest" (ROI) bezeichnet.
Nachdem mittels der Vorverarbeitungsstufe die ROIs definiert wurden, kann man sich im Rahmen der eigentlichen Auswerteschaltung darauf beschränken, nur die erfassten Bilddaten dieser ROIs zu verarbeiten, was entsprechend weniger Rechenleistung erfordert als die Verarbeitung der vollständigen, von der Kamera aufgenommenen Bilder.

Gemäß Stand der Technik werden die ROIs über eine Vorverarbeitung der kompletten erfassten Bilddaten ermittelt, wobei hier aufgrund des hohen Bilddatenstroms einfache Algorithmen zur Anwendung gelangen, die beispielsweise nur feststellen, ob der Grauwert eines Pixels oberhalb eines vorgegebenen Schwellwerts liegt. Wenn dies der Fall ist, wird das überprüfte Pixel einer ROI zugeordnet, anderenfalls wird es bei der weiteren Auswertung nicht berücksichtigt. Derartige Algorithmen sind unter anderem mit dem Nachteil behaftet, dass die jeweilige Bedingung, im vorstehend genannten Beispiel das Überschreiten eines vorgegebenen Schwellwerts, nicht zuverlässig immer erfüllt wird, da beispielsweise ein zu erfassendes, interessierendes Objekt nicht zwangsläufig immer heller ist als der das Objekt umgebende Hintergrund. In derartigen Fällen können die genannten Algorithmen nicht oder nur eingeschränkt zur Anwendung gelangen.

US-A-2003/206 305 offenbart eine Vorrichtung zur Erfassung von durch das Gesichtsfeld eines optischen Sensors bewegten Objekten, wobei mittels des optischen Sensors der Abstand der Objekte zum Sensor ermittelt werden kann. Zusätzlich zu dem genannten optischen Sensor kann ein Scanner vorgesehen werden, der unter anderem in Abhängigkeit von denjenigen Daten, die der optische Sensor liefert, fokussierbar ist.

In der EP-A-0 647 479 wird mit einer ersten, grobauflösenden Kamera die Position der Adressetikette als interessierenden Bereich auf einem auf einem Förderer vorbeilaufenden Paket bestimmt. Eine hochauflösende Kamera ist dieser nachgeschaltet, welche den interessierenden Bereich aufnimmt und einer Schrifterkennungseinheit zuführt.
Die US-A-5 311 999 beschreibt ein System, bei dem mit sechs Kameras alle Flächen eines auf einem Förderband vorbeilaufenden Objektes aufgenommen werden.

Eine Aufgabe der Erfindung besteht darin, eine Vorrichtung und ein Verfahren der eingangs genannten Art derart weiterzubilden, dass die interessierenden Bereiche (ROIs) innerhalb des Gesichtsfelds einer Kamera mit möglichst hoher Zuverlässigkeit ermittelt werden können.

Diese Aufgabe wird gelöst durch die Merkmale des Anspruchs 1. Weiterhin wird diese Aufgabe gelöst durch die Merkmale des Anspruchs 19.

Erfindungsgemäß werden also die von der Kamera ermittelten Bilddaten überhaupt nicht zur Bestimmung der ROIs herangezogen, vielmehr wird für die Ermittlung der ROIs ein separates Gerät, nämlich ein Laserscanner, eingesetzt, welcher dazu in der Lage ist, seine Entfernung von den ihm zugewandten Objektoberflächen zu bestimmen. Wenn dann weiterhin der Abstand zwischen dem Laserscanner und der Fläche, auf der die zu erfassenden Objekte aufliegen bekannt ist, können problemlos die Positionen derjenigen vom Laserscanner erfassten Bereiche bestimmt werden, bei denen der ermittelte Abstand nicht mit dem Abstand zum Hintergrund übereinstimmt. Bei diesen Bereichen handelt es sich dann um ROIs, in denen ein Objekt vorhanden ist. Die auf die erfindungsgemäße Weise bestimmte Positionsinformation der ROIs wird dann dafür verwendet, im Rahmen der Auswerteschaltung nur noch diejenigen von der Kamera erfassten Bildinhalte auszuwerten, die den zuvor bestimmten ROIs zugeordnet sind.

Bei der Auswerteschaltung kann es sich um ein separates Bauteil, aber auch um einen Bestandteil der Kamera oder des Laserscanners handeln.

Da beim Einsatz eines Laserscanners, welcher das Remissionsverhalten nicht berücksichtigt, die Bestimmung des Abstandes zwischen dem erfindungsgemäß vorgesehenen Laserscanner und den abzutastenden Objektoberflächen vollkommen unabhängig von dem Reflexionsvermögen, der Beschaffenheit und der Farbe der Objektoberflächen sowie des die Objekte umgebenden Hintergrundes ist, kann mit dieser erfindungsgemä-ßen Variante mit sehr hoher Zuverlässigkeit festgestellt werden, wo sich zu erfassende Objekte befinden, ohne dass hierfür in relevanter Weise Rechenkapazität der Auswerteschaltung beansprucht wird.

Die Rechenleistung der Auswerteschaltung kann bei allen erfindungsgemäßen Varianten so ausgelegt werden, dass sie dazu in der Lage ist, die Bilddaten der ROIs in der jeweils erforderlichen Geschwindigkeit, ggf. in Echtzeit, zu verarbeiten. Eine höhere Rechenleistung ist nicht erforderlich, da die ROIs - wie erwähnt - erfindungsgemäß gewissermaßen ohne Beanspruchung der Rechenkapazität der Auswerteschaltung bestimmt werden können.

Der erfindungsgemäß eingesetzte Laserscanner kann aus einer oder mehreren Einheiten bestehen und muss dazu in der Lage sein, Abstände zu unterschiedlichen Punkten der Oberfläche der zu erfassenden Objekte zu bestimmen. Zusätzlich zu den Abständen müssen dann den jeweiligen Abstandswerten zugeordnete Positionsinformationen bekannt bzw. ermittelbar sein, damit bestimmt werden kann, an welchen Orten Objektbereiche vorhanden sind, um diese Bereiche im Folgenden als ROIs berücksichtigen zu können.

Eine besonders genaue Arbeitsweise der erfindungsgemäßen Vorrichtung lässt sich erreichen, wenn der Laserscanner oder eine Anordnung aus mehreren Laserscannern dazu in der Lage ist, die Abstandswerte zu möglichst vielen, möglicht dicht beieinanderliegenden Punkten der Objektoberflächen zu bestimmen, wobei es besonders vorteilhaft ist, wenn ein vollständiges Abtasten der Objektoberflächen ermöglicht wird.

Der erfindungsgemäß eingesetzte Laserscanner ist nicht nur zur Bestimmung von Abständen sondern zusätzlich auch zur Bestimmung zugehöriger Positionsinformationen ausgelegt. Ein Laserscanner, der als Linien- oder Flächenscanner ausgeführt sein kann, ermöglicht das vollständige Abtasten von Objekten, wobei zu jedem ermitteltem Abstandswert beispielsweise in Form von Polarkoordinaten vorliegende Positionsinformationen ermittelbar sind. Vorteilhaft ist ferner, dass derartige Laserscanner handelsübliche Geräte darstellen, so dass mit ihnen eine erfindungsgemäße Vorrichtung wirtschaftlich realisiert werden kann.

Der erfindungsgemäß eingesetzte Laserscanner ist bevorzugt zur Aussendung eines periodisch innerhalb einer Abtastebene bewegten Laserstrahls ausgelegt. Wenn ein zu erfassendes Objekt durch diese Abtastebene hindurchbewegt wird, ist es möglich, das Objekt vollständig abzutasten und ein dreidimensionales Höhenprofil des Objektes zu ermitteln. Die Position dieses Höhenprofils in der gesamten abgetasteten Fläche entspricht dann einer ROI.
Die Abtastebene des Laserscanners kann sich senkrecht oder schräg zur Bewegungsrichtung der Objekte erstrecken. Wichtig ist lediglich, dass die Abtastebene relativ zu den zu erfassenden Objekten so orientiert ist, dass der Laserstrahl sämtliche, dem Laserscanner zugewandte Objektoberflächen erreichen kann.

Besonders bevorzugt ist es, wenn das erfindungsgemäß eingesetzte Messgerät nicht nur Abstände und zugehörige Positionsinformationen, sondern zusätzlich auch noch das Remissionsverhalten der erfassten Objektbereiche bestimmen kann. In diesem Fall wird es z.B. möglich, die erfindungsgemäß festgelegten ROIs in Abhängigkeit vom ermittelten Remissionsverhalten noch weiter zu segmentieren und innerhalb der ROIs besonders interessante Bereiche festzulegen. Bei der weiteren Auswertung können dann beispielsweise nur noch diese besonders interessanten Bereiche untersucht werden. Konkret kann beispielsweise durch die Untersuchung des Remissionsverhaltens einer ermittelten ROI innerhalb dieser ROI festgestellt werden, an welcher Stelle sich ein Code, beispielsweise ein Barcode, befindet. Die Auswerteschaltung kann sich dann darauf beschränken, ausschließlich denjenigen Bereich zu untersuchen, in dem sich der Code befindet, was entsprechend weniger Rechenleistung benötigt als die Untersuchung der kompletten, als ROI bestimmten Objektoberfläche. Gemäß der erläuterten bevorzugten erfindungsgemäßen Variante werden also die letztlich besonders interessierenden und weiter zu verarbeitenden Bereiche in Abhängigkeit von den ermittelten Abständen und dem ermittelten Remissionsverhalten berechnet.

Vorteilhaft ist ferner, wenn die Auswerteschaltung in der Weise zur Berücksichtigung des Schärfentiefebereichs der Kamera ausgelegt ist, dass nur solche interessierende Bereiche ermittelbar sind, in denen sich die Objektoberfläche im Schärfentiefebereich der Kamera befindet. Diese Erfindungsvariante kann ohne weiteres realisiert werden, wenn der Auswerteschaltung die dem Schärfentiefebereich entsprechenden Abstandswerte bekannt sind, da in diesem Fall all diejenigen Bereiche der Objektoberfläche bei der Auswertung unberücksichtigt bleiben können, deren Abstände zum Laserscanner außerhalb des Schärfentiefebereichs der Kamera liegen. Auf diese Art und Weise lässt sich die benötigte Rechenleistung der Auswerteschaltung noch weiter reduzieren, da bei der Auswertung auch innerhalb von ROIs liegende Bereiche der Objektoberflächen unberücksichtigt bleiben können, wenn sie sich außerhalb des Schärfentiefebereichs befinden. Rechenleistung wird nur für diejenigen Objektoberflächenbereiche benötigt, die zum einen innerhalb einer ermittelten ROI und zum anderen auch innerhalb des Schärfentiefebereichs liegen.

Die im Rahmen der Erfindung eingesetzte Kamera kann zum Beispiel als Zeilen- oder Matrixkamera oder auch als Barcodescanner ausgebildet werden. Besonders vorteilhaft ist es, wenn eine Zeilenkamera in Verbindung mit dem Laserscanner eingesetzt wird, da die Abtast- bzw. Erfassungsebenen beider Vorrichtungen dann so zueinander ausgerichtet werden können, dass sie die Objekte innerhalb ihrer jeweiligen Gesichtsfelder an jeweils gleichen Positionen erfassen, so dass die über den Laserscanner ermittelten Positionen der ROIs direkt als Positionsinformationen für die Zeilenkamera weiterverarbeitet werden können, ohne dass eine Transformation zwischen verschiedenen Koordinatensystemen beider Geräte erfolgen muss. Ebenso ist es jedoch auch möglich, die Kamera und den Laserscanner in ein einziges Gerät mit gemeinsamem Gehäuse zu integrieren, so dass eine vor Ort erfolgende Ausrichtung von Kamera und Laserscanner zueinander entfallen kann. Weiterhin wird in diesem Fall dann ebenfalls die vorstehend erwähnte Transformation eingespart.

Die erfindungsgemäß durch das Gesichtsfeld der Kamera bewegten Objekte können mittels einer Fördereinrichtung, insbesondere mittels eines Förderbandes bewegt werden. Die Fördereinrichtung wird dabei bevorzugt mit konstanter Geschwindigkeit betrieben. Der erfindungsgemäß eingesetzte Laserscanner kann dabei oberhalb der Fördereinrichtung, aber auch seitlich der Fördereinrichtung angebracht werden, je nachdem, ob Oberflächen oder Seitenflächen von Objekten erfasst werden sollen.

Wenn über den erfindungsgemäß eingesetzten Laserscanner die Position von ROIs bestimmt werden, kann über die Geschwindigkeit der Fördereinrichtung sowie den Abstand zwischen den Gesichtsfeldern bzw. Abtastebenen von Laserscanner und Kamera auf einfache Weise berechnet werden, zu welchem Zeitpunkt sich die über den Laserscanner ermittelte ROI im Gesichtsfeld der Kamera befindet und wo die ermittelte ROI innerhalb dieses Gesichtsfelds liegt.

Für eine Echtzeit-Bildverarbeitung ist es nötig, den Laserscanner der Kamera in Förderrichtung vorzuschalten oder beide Geräte in einem einzigen Gehäuse zu integrieren, da die Positionen der ROIs in diesem Fall bereits bekannt sein müssen, wenn oder kurz nachdem die Objekte in das Gesichtsfeld der Kamera gelangen. Falls keine Echtzeitverarbeitung benötigt wird, ist es grundsätzlich auch möglich, den Laserscanner der Kamera in Förderrichtung der Objekte nachzuschalten.

Die Auswerteschaltung kann erfindungsgemäß zusätzlich zur in Abhängigkeit von den ermittelten Abständen erfolgenden Bestimmung der Geometrie der Objekte ausgelegt werden. Aus diesen Informationen kann dann bei Bedarf auch das Volumen der erfassten Objekte berechnet werden. Bei vielen in der Praxis vorhandenen Anwendungen werden ohnehin Laserscanner eingesetzt, um die Volumina von an diesen Laserscannern vorbeigeförderten Objekten zu bestimmen. Bei derartigen Anwendungsfällen ist die erfindungsgemäße Vorrichtung besonders wirtschaftlich einsetzbar, da kein apparativer Zusatzaufwand betrieben werden muss, sondern die Realisierung einer erfindungsgemäßen Vorrichtung lediglich durch eine Umprogrammierung der ebenfalls regelmäßig entweder innerhalb des Laserscanners oder als separates Bauteil vorhandenen Auswerteschaltung erfolgen kann.

Von Vorteil ist ferner, wenn eine in Abhängigkeit von den ermittelten Abständen beaufschlagte Kamera-Fokussiereinrichtung vorgesehen wird. Auf diese Weise kann sichergestellt werden, dass die Kamera immer auf die jeweils interessierende Objektoberfläche fokussiert ist.

Ferner kann eine Objektbeleuchtungseinrichtung vorgesehen werden, die über die Auswerteschaltung derart ansteuerbar ist, dass ROIs beleuchtet und nicht interessierende Bereiche nicht beleuchtet werden. Durch eine derartige, selektive Beleuchtung werden die Lichtquellen der Objektbeleuchtungseinrichtung weniger belastet, so dass sich deren Lebensdauer erhöhen lässt. Ebenso ist es jedoch möglich, die Objektbeleuchtungseinrichtung über die Auswerteschaltung so anzusteuern, dass ROIs stärker beleuchtet werden als nicht interessierende Bereiche. Durch eine derart erhöhte Beleuchtungsstärke im Bereich der ROIs lässt sich die Bildqualität der von der Kamera erfassten Bilder oder beispielsweise auch die Leserate eines eingesetzten Barcodescanners erhöhen. Dadurch dass nicht interessierende Bereiche weniger stark beleuchtet werden, werden die Lichtquellen insgesamt durch die gesamte Maßnahme nicht stärker belastet, so dass deren Lebensdauer durch die erhöhte Beleuchtungsstärke im Bereich der ROIs nicht negativ beeinflusst wird.

Die vorstehend erläuterten Varianten der Ansteuerung der Objektbeleuchtungseinrichtung lassen sich besonders vorteilhaft dann einsetzen, wenn die Lichtquellen der Objektbeleuchtungseinrichtung als LEDs ausgeführt sind. Hier wirken sich die erläuterten Maßnahmen besonders vorteilhaft aus, da die Lebensdauer von LEDs grundsätzlich begrenzt ist.

Erfindungsgemäß ist es weiterhin von Vorteil, wenn die Kamera und/oder die Auswerteschaltung mit einer Datenschnittstelle ausgestattet werden, die zur Übertragung der auf interessierende Bereiche bezogenen Daten an ein externes Gerät geeignet ist. Ein solches externes Gerät kann beispielsweise zur automatisierten Decodierung von Schriftzeichen und/oder zur optischen Darbietung von Bildbereichen mit automatisiert nicht decodierbaren Schriftzeichen geeignet sein.

Durch die genannte Datenschnittstelle wird es möglich, den Umfang der an ein externes Gerät zur weiteren Verarbeitung übertragenen Daten auf das notwendige Minimum zu reduzieren, so dass das externe Gerät bei der Weiterverarbeitung dieser Daten nicht unnötig, sondern nur in dem jeweils erforderlichen Umfang belastet wird. Besonders vorteilhaft ist dies beispielsweise dann, wenn das externe Gerät dazu ausgelegt ist, einer Person solche Bildbereiche visuell darzubieten, die nicht automatisiert decodiert werden konnten, da in diesem Fall die genannte Person nicht damit belastet wird, Bildbereiche zu betrachten, die keine zu decodierende Information oder die bereits zuvor automatisiert decodierte Schriftzeichen darstellen.

Beim Einsatz der genannten Datenschnittstelle ist es besonders bevorzugt, wenn die Kamera und/oder die Auswerteschaltung mit einer Komprimierungsstufe zur Komprimierung der auf interessierende Bereiche bezogenen, über die Datenschnittstelle zu übertragenden Daten ausgestattet ist. Mit einer derartigen Komprimierungsstufe kann die Menge der zu einem externen Gerät zu übertragenden Daten nach einer Beschränkung auf die interessierenden Bereiche noch zusätzlich reduziert werden. Besonders wünschenswert ist es dabei, wenn die Komprimierungsstufe zur Komprimierung von auf interessierende Bereiche bezogenen Bilddaten bereits während der Erfassung des jeweiligen Bildes ausgelegt ist. Auf diese Weise erfolgt die Komprimierung praktisch zum frühest möglichen Zeitpunkt, da sie zumindest großteils bereits während der Bilderfassung abläuft, so dass die Daten auch zu einem sehr frühen Zeitpunkt am externen Gerät zur Verfügung stehen, was letztlich zur Folge hat, dass für die Weiterverarbeitung durch das externe Gerät mehr Zeit vorhanden ist.

Die Komprimierung während der Erfassung kann nach unterschiedlichen Verfahren ablaufen:
Bei Auslegung der Kamera als Zeilenkamera ist es beispielsweise möglich, jede vollständig empfangene, auf einen interessierenden Bereich bezogene Bildzeile unmittelbar nach deren Erfassung zu komprimieren.
Alternativ ist es möglich, eine vorbestimmte Anzahl von vollständig empfangenen, auf einen interessierenden Bereich bezogenen Bildzeilen unmittelbar nach der Erfassung der genannten Anzahl von Bildzeilen zu komprimieren.
Schließlich ist es beispielsweise auch möglich, eine vorbestimmte Anzahl von empfangenen, auf einen interessierenden Bereich bezogenen Pixeln einer oder mehrerer Bildzeilen unmittelbar nach der Erfassung der genannten Anzahl von Pixeln zu komprimieren.
Andere Ausführungsvarianten sind ebenfalls denkbar.

Weitere bevorzugte Ausführungsformen der Erfindung sind in den abhängigen Ansprüchen angegeben.

Die Erfindung wird nachfolgend anhand von Ausführungsbeispielen unter Bezugnahme auf die Zeichnungen beschrieben; in diesen zeigen:
- Fig. 1: ein dreidimensionales Prinzipschaubild einer erfindungsgemäßen Vorrichtung,
- Fig. 2: eine Draufsicht auf ein Förderband gemäß Fig. 1,
- Fig. 3: eine weitere Draufsicht auf das Förderband gemäß Fig. 1 mit besonders interessierenden Objektbereichen,
- Fig. 4: eine Seitenansicht einer Kamera sowie eines Objektes mit Kennzeichnung des Schärfentiefebereichs der Kamera,
- Fig. 5a, b: Draufsichten auf ein Objekt gemäß Fig. 4, und
- Fig. 6: eine weitere Draufsicht auf ein Förderband gemäß Fig. 1 mit besonders gekennzeichneten beleuchteten Bereichen.

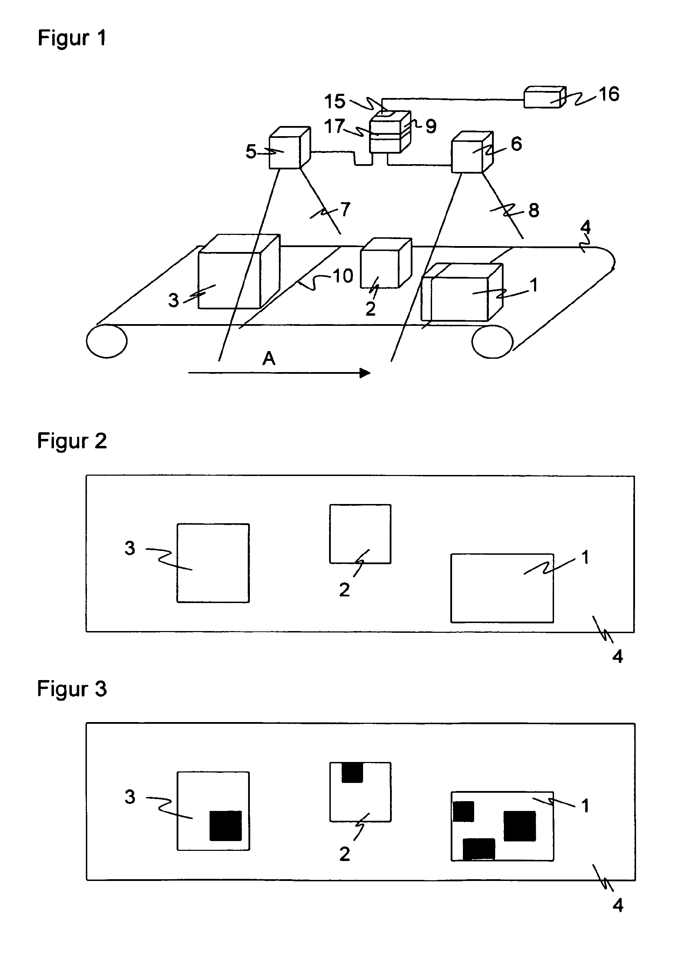

Fig. 1 zeigt drei Objekte 1, 2, 3, welche sich auf einem Förderband 4 befinden, das die Objekte 1, 2, 3 in Richtung des Pfeils A transportiert. Oberhalb des Förderbandes 4 sind in Förderrichtung A nacheinander ein Laserscanner 5 sowie eine Zeilenkamera 6 montiert.

Beim Laserscanner 5 handelt es sich um einen Linienscanner, welcher dazu geeignet ist, periodisch einen innerhalb einer Abtastebene 7 bewegten Laserstrahl auszusenden. Die Abtastebene 7 erstreckt sich dabei senkrecht zur Förderrichtung A. Der Laserscanner 5 ist gegenüber dem Förderband 4 so positioniert, dass der ausgesandte Laserstrahl das Förderband 4 über etwas mehr als seine gesamte Breite abtastet, so dass sämtliche Objekte, die sich auf dem Förderband 4 befinden, vom Laserscanner 5 erfasst werden können.

In entsprechender Weise ist das V-förmige, innerhalb einer Ebene 8 liegende Gesichtsfeld der Zeilenkamera 6 so ausgerichtet, dass alle auf dem Förderband 4 unter der Zeilenkamera 6 vorbei geförderten Objekte von der Zeilenkamera 6 erfasst werden können. Die Ebene 8 des Gesichtsfeldes der Zeilenkamera 6 erstreckt sich dabei parallel zur Abtastebene 7 des Laserscanners 5 und senkrecht zur Förderrichtung A.

Laserscanner 5 und Zeilenkamera 6 sind mit einer Steuer- und Auswerteschaltung 9 verbunden, welche zum einen dazu geeignet ist, Laserscanner 5 und Zeilenkamera 6 in der erfindungsgemäß nötigen Weise anzusteuern und zum anderen auch für eine Auswertung der von Laserscanner 5 und Zeilenkamera 6 gelieferten Daten sorgt.

Der Steuer- und Auswerteschaltung 9 sind die Abstände des Laserscanners 5 zur Förderebene des Förderbandes 4 bezüglich all derjenigen Punkte bekannt, in denen die Abtastebene 7 des Laserscanners 5 diese Förderebene schneidet. Die entsprechende Schnittlinie ist in Fig. 1 mit dem Bezugszeichen 10 gekennzeichnet. Wenn nun die Steuer- und Auswerteschaltung 9 vom Laserscanner 5 nur Abstände geliefert bekommt, die diesen bekannten Abständen zur Förderebene entsprechen, ist der Steuer- und Auswerteschaltung bekannt, dass sich kein Objekt innerhalb der Abtastebene 7 befindet, so dass zum entsprechenden Zeitpunkt in der Abtastebene 7 keine ROI vorliegt. Liefert der Laserscanner 5 hingegen Abstandsdaten, die von den bekannten Abstandsdaten zwischen Laserscanner 5 und Förderebene abweichen, so existiert an denjenigen Positionen, an denen die genannten Abweichungen auftreten, Objektoberflächen, die nicht mit der Förderebene zusammenfallen, sondern die sich näher am Laserscanner 5 befinden als die Förderebene. Diese Positionen werden dann von der Steuer- und Auswerteschaltung 9 einer ROI zugeordnet.

Somit kann mittels des Laserscanners 5 und der Steuer- und Auswerteschaltung 9 festgestellt werden, an welchen Positionen des Förderbands 4 sich Objekte 1, 2, 3 befinden. Aus der Fördergeschwindigkeit und dem Abstand zwischen der Abtastebene 7 und der Gesichtsfeldebene 8 der Zeilenkamera 6 kann dann problemlos berechnet werden, wann sich die vom Laserscanner 5 erfassten Objekte 1, 2, 3 in der Gesichtsfeldebene 8 der Zeilenkamera 6 befinden und an welcher Position innerhalb dieser Gesichtsfeldebene 8 sich die Objekte 1, 2, 3 aufhalten. Die von der Zeilenkamera 6 an die Steuer- und Auswerteschaltung 9 gelieferten Daten werden in der Folge nur dann ausgewertet, wenn sie einer ROI zugeordnet sind. Bilddaten, die lediglich die Förderebene des Förderbands 4 ohne darauf befindliche Objekte 1, 2, 3 zeigen, werden erfindungsgemäß nicht interessierenden Bereichen zugeordnet und bei der Auswertung der Bilddaten nicht berücksichtigt.

Die Auswerteschaltung 9 ist mit einer Datenschnittstelle 15 ausgestattet, über die auf ROIs bezogene Daten an ein externes Gerät 16 übertragen werden können. Das externe Gerät 16 kann beispielsweise zur automatisierten Decodierung von Schriftzeichen geeignet sein.

Schließlich ist die Auswerteschaltung 9 auch noch mit einer Komprimierungsstufe 17 ausgestattet, welche dazu geeignet ist, die auf ROIs bezogene Daten insbesondere bereits während deren Erfassung zu komprimieren, so dass diese dann mit reduziertem Umfang über die Datenschnittstelle 15 zum externen Gerät 16 übertragen werden können.

Fig. 2 zeigt in Draufsicht die auf dem Förderband 4 transportierten Objekte 1, 2, 3. Die in der Draufsicht sichtbaren Objektoberflächen, die in Fig. 2 grau dargestellt sind, werden mit einer Vorrichtung gemäß Fig. 1 als ROIs klassifiziert, so dass die Steuer- und Auswerteschaltung 9 nur von der Zeilenkamera 6 gelieferte Bilddaten verarbeitet, die diesen ROIs zugeordnet sind.

Wie bereits erläutert, kann der Laserscanner 5 zusätzlich auch noch zur Bestimmung des Remissionsverhaltens der Objektoberflächen ausgelegt sein, um auf diese Weise beispielsweise die Positionen von auf den Objektoberflächen angebrachten Codes ermitteln zu können. Fig. 3 zeigt eine Fig. 2 entsprechende Darstellung, wobei hier jedoch nur solche besonders interessierenden Bereiche als grau gekennzeichnete ROIs dargestellt sind, in denen von der Zeilenkamera 6 gemäß Fig. 1 zu lesende Codes vorhanden sind. Es müssen also nicht die gesamten, aus Fig. 2 ersichtlichen Objektoberflächen bei einer Bildverarbeitung durch die Steuer- und Auswerteeinheit 9 berücksichtigt werden. Vielmehr genügt eine Auswertung der in Fig. 3 grau gekennzeichneten Bereiche der Objektoberflächen.

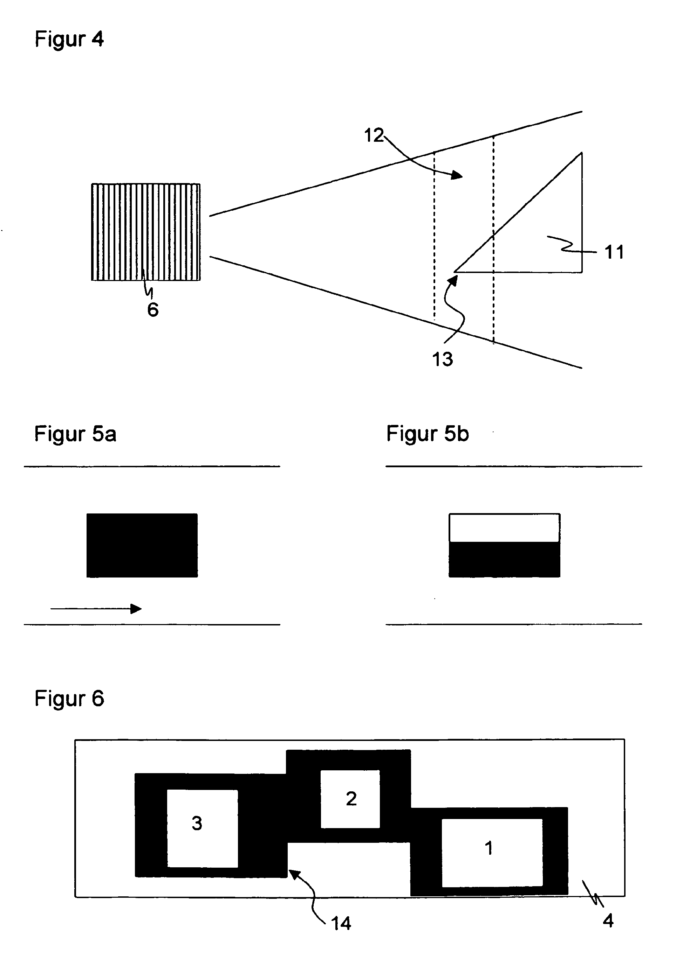

Fig. 4 zeigt in Seitenansicht eine Zeilenkamera 6, welche so ausgerichtet ist, dass sie zur Erfassung eines im Querschnitt dreieckigen Objekts 11 geeignet ist. Der Schärfentiefebereich der Zeilenkamera 6 ist mit 12 gekennzeichnet. Aus Fig. 4 ist ersichtlich, dass sich lediglich ein kleiner, der Zeilenkamera 6 zugewandter Bereich 13 des Objekts 11 im Schärfentiefebereich 12 der Zeilenkamera 6 befindet. Im Rahmen der Bildverarbeitung ist es dementsprechend sinnvoll, nur diejenigen vom Objekt 11 aufgenommenen Bilddaten zu verarbeiten, die von einem Objektoberflächenbereich herrühren, der sich innerhalb des Schärfentiefebereichs 12 befindet. Mittels des Laserscanners 5 kann der Abstand zwischen der Zeilenkamera und den ihr zugewandten Oberflächen des Objekts 11 vorab bestimmt werden, so dass dann in der Steuer- und Auswerteschaltung 9 letztlich nur diejenigen Bilddaten verarbeitet werden, die Objektoberflächenbereichen zugeordnet sind, welche sich im Schärfentiefebereich 12 befinden. Auf diese Weise lassen sich die zu verarbeitenden Bilddaten noch weiter reduzieren, was die Fig. 5a und 5b veranschaulichen.

Fig. 5a zeigt in dunkelgrauer Farbe alle Oberflächenbereiche des Objekts 11, die von der Zeilenkamera 6 gemäß Fig. 4 erfasst werden können, und zwar unabhängig davon, ob sie sich innerhalb des Schärfentiefebereichs 12 befinden oder nicht.

In Fig. 5b sind dunkelgrau nur diejenigen Oberflächenbereiche dargestellt, welche dem Schärfentiefebereich 12 zugeordnet werden können. Alle anderen Oberflächenbereiche des Objekts 11 sind in hellgrauer Farbe dargestellt. Gemäß dem bevorzugten erfindungsgemäßen Verfahren entsprechend Fig. 4 gelangen nur diejenigen Bilddaten zur weiteren Verarbeitung durch die Steuer- und Auswerteschaltung 9, die in Fig. 5b dunkelgrau gekennzeichnet sind und die von Objektoberflächenbereichen herrühren, die sich innerhalb des Schärfentiefebereichs 12 der Zeilenkamera 6 befinden. Es ist also in Abhängigkeit vom Schärfentiefebereich 12 der Zeilenkamera 6 eine weitere Reduktion der über den Laserscanner 5 definierten ROIs möglich.

Fig. 6 zeigt nochmals das Förderband gemäß den Fig. 1 bis 4, wobei hier zusätzlich zu den Objekten 1, 2, 3 in Draufsicht dunkelgrau schraffiert auch noch derjenige Bereich 14 gekennzeichnet ist, welcher mittels einer nicht dargestellten Objektbeleuchtungseinrichtung gezielt beleuchtet werden kann. Wie bereits erläutert, kann über die vom Laserscanner 5 ermittelten Daten eine Beleuchtungseinrichtung so angesteuert werden, dass im Wesentlichen nur die ROIs oder Bereiche, die etwas über die ROIs hinausgehen, beleuchtet werden. Der Beleuchtungsbereich 14 gemäß Fig. 6 wird nicht gleichzeitig beleuchtet. Vielmehr genügt es, im Wesentlichen streifenförmig immer nur denjenigen Bereich der Objekte 1, 2, 3 zu beleuchten, der sich innerhalb der Gesichtsfeldebene 8 der Zeilenkamera 6 gemäß Fig. 1 befindet. Die Länge und die Position des sich quer zur Förderrichtung A erstreckenden streifenförmigen Bereichs sind dabei abhängig von den über Laserscanner 5 und Steuer- und Auswerteschaltung 9 ermittelten ROIs.

### Bezugszeichenliste

- 1: Objekt
- 2: Objekt
- 3: Objekt
- 4: Förderband
- 5: Laserscanner
- 6: Zeilenkamera
- 7: Abtastebene
- 8: Ebene
- 9: Steuer- und Auswerteschaltung
- 10: Schnittlinie
- 11: Objekt
- 12: Schärfentiefebereich
- 13: Beleuchtungsbereich
- 14: Beleuchtungsbereich
- 15: Datenschnittstelle
- 16: externes Gerät
- 17: Komprimierungsstufe

## Patentansprüche

1. Vorrichtung zur Erfassung von durch das Gesichtsfeld einer Kamera (6) bewegten Objekten (1, 2, 3) mit einer Einrichtung zur Selektion von interessierenden Bereichen, die jeweils lediglich einem Teil des Gesichtfeldes der Kamera (6) zugeordnet sind, wobei eine Auswerteschaltung (9) dazu ausgelegt ist, nur noch diejenigen von der Kamera (6) erfassten Bildinhalte auszuwerten, die den zuvor bestimmten interessierenden Bereichen zugeordnet sind,
**dadurch gekennzeichnet,**
**dass** ein Laserscanner (5), welcher zur Ermittlung des Abstandes der ihm zugewandten Objektoberflächen und zur Ermittlung der Position dieser Objektoberflächen ausgelegt ist, in die Kamera (6) integriert oder dieser in Bewegungsrichtung (A) der Objekte (1, 2, 3) vor- oder nachgeschaltet ist,
und **dass** der Laserscanner (5) mit der Auswerteschaltung (9) zur Berechnung der interessierenden Bereiche in Abhängigkeit von den ermittelten Abständen und Positionen gekoppelt ist.

2. Vorrichtung nach Anspruch 1,
**dadurch gekennzeichnet,**
**dass** der Laserscanner (5) aus mehreren Einheiten besteht.

3. Vorrichtung nach Anspruch 2,
**dadurch gekennzeichnet,**
**dass** der Laserscanner (5) zur Aussendung eines periodisch innerhalb einer Abtastebene (7) bewegten Laserstrahls ausgelegt ist.

4. Vorrichtung nach Anspruch 3,
**dadurch gekennzeichnet,**
**dass** sich die Abtastebene (7) senkrecht oder schräg zur Bewegungsrichtung (A) der Objekte (1, 2, 3) erstreckt.

5. Vorrichtung nach einem der vorhergehenden Ansprüche,
**dadurch gekennzeichnet,**
**dass** die Auswerteschaltung (9) zur Berechnung der interessierenden Bereiche in Abhängigkeit von den ermittelten Abständen und einem zusätzlich vom Laserscanner (5) ermittelten Remissionsverhalten ausgelegt ist.

6. Vorrichtung nach einem der vorhergehenden Ansprüche,
**dadurch gekennzeichnet,**
**dass** die Auswerteschaltung (9) in der Weise zur Berücksichtigung des Schärfentiefebereichs der Kamera (6) ausgelegt ist, dass nur solche interessierende Bereiche ermittelbar sind, in denen sich die Objektoberfläche im Schärfentiefebereich der Kamera (6) befindet.

7. Vorrichtung nach einem der vorhergehenden Ansprüche,
**dadurch gekennzeichnet,**
**dass** die Kamera (6) als Zeilen- oder Matrixkamera oder als Barcodescanner ausgebildet ist.

8. Vorrichtung nach einem der vorhergehenden Ansprüche,
**dadurch gekennzeichnet,**
**dass** eine Fördereinrichtung (4), insbesondere ein Förderband zur Bewegung der Objekte vorgesehen ist.

9. Vorrichtung nach einem der vorhergehenden Ansprüche,
**dadurch gekennzeichnet,**
**dass** die Auswerteschaltung (9) zur in Abhängigkeit von den ermittelten Abständen erfolgenden Bestimmung der Geometrie der Objekte (1, 2, 3) ausgelegt ist.

10. Vorrichtung nach einem der vorhergehenden Ansprüche,
**dadurch gekennzeichnet,**
**dass** die Auswerteschaltung (9) zur in Abhängigkeit von den ermittelten Abständen erfolgenden Bestimmung der Volumina der Objekte (1, 2, 3) ausgelegt ist.

11. Vorrichtung nach einem der vorhergehenden Ansprüche,
**dadurch gekennzeichnet,**
**dass** eine in Abhängigkeit von den ermittelten Abständen beaufschlagte Kamera-Fokussiereinrichtung vorgesehen ist.

12. Vorrichtung nach einem der vorhergehenden Ansprüche,
**dadurch gekennzeichnet,**
**dass** eine Objektbeleuchtungseinrichtung vorgesehen ist, die über die Auswerteschaltung derart ansteuerbar ist, dass interessierende Bereiche (13) beleuchtet und nicht interessierende Bereiche nicht beleuchtet werden.

13. Vorrichtung nach einem der vorhergehenden Ansprüche,
**dadurch gekennzeichnet,**
**dass** eine Objektbeleuchtungseinrichtung vorgesehen ist, die über die Auswerteschaltung derart ansteuerbar ist, dass interessierende Bereiche (13) stärker beleuchtet werden als nicht interessierende Bereiche.

14. Vorrichtung nach einem der Ansprüche 12 oder 13,
**dadurch gekennzeichnet,**
**dass** die Lichtquellen der Objektbeleuchtungseinrichtung als LEDs ausgelegt sind.

15. Vorrichtung nach einem der vorhergehenden Ansprüche,
**dadurch gekennzeichnet,**
**dass** die Kamera (6) und/oder die Auswerteschaltung (9) eine Datenschnittstelle (15) zur Übertragung der auf interessierende Bereiche bezogenen Daten an ein externes Gerät (16) aufweist.

16. Vorrichtung nach Anspruch 15,
**dadurch gekennzeichnet,**
**dass** das externe Gerät (16) zur automatisierten Decodierung von Schriftzeichen und/oder zur optischen Darbietung von Bildbereichen mit nicht automatisiert decodierbaren Schriftzeichen ausgelegt ist.

17. Vorrichtung nach einem der Ansprüche 15 oder 16,
**dadurch gekennzeichnet,**
**dass** die Kamera (6) und/oder die Auswerteschaltung (9) mit einer Komprimierungsstufe (17) zur Komprimierung der auf interessierende Bereiche bezogenen, über die Datenschnittstelle (15) zu übertragenden Daten ausgestattet ist.

18. Vorrichtung nach Anspruch 17,
**dadurch gekennzeichnet,**
**dass** die Komprimierungsstufe (17) zur Komprimierung von auf interessierende Bereiche bezogenen Bilddaten bereits während der Erfassung des jeweiligen Bildes ausgelegt ist.

19. Verfahren zur Erfassung von durch das Gesichtsfeld einer Kamera (6) bewegten Objekten (1, 2, 3), bei dem interessierende Bereiche, die jeweils lediglich einem Teil des Gesichtfeldes der Kamera (6) zugeordnet sind, selektiert werden, wobei eine Auswerteschaltung (9) nur noch diejenigen von der Kamera (6) erfassten Bildinhalte auswertet, die den zuvor bestimmten interessierenden Bereichen zugeordnet sind,
**dadurch gekennzeichnet,**
**dass** ein Laserscanner (5) den Abstand der ihm zugewandten Objektoberflächen und die Position dieser Objektoberflächen ermittelt, wobei der Laserscanner (5) in die Kamera (6) integriert oder dieser in Bewegungsrichtung (A) der Objekte (1, 2, 3) vor- oder nachgeschaltet wird,
und **dass** die mit dem Laserscanner (5) gekoppelte Auswerteschaltung (9) die interessierenden Bereiche in Abhängigkeit von den ermittelten Abständen und Positionen berechnet.

20. Verfahren nach Anspruch 19,
**dadurch gekennzeichnet,**
**dass** mit dem Laserscanner (5) zusätzlich mit einem Remissionsmesser (5) das Remissionsverhalten der dem Laserscanner (5) zugewandten Objektoberflächen ermittelt wird und anschließend die interessierenden Bereiche in Abhängigkeit von den ermittelten Abständen und dem ermittelten Remissionsverhalten berechnet werden.

21. Verfahren nach einem der Ansprüche 19 oder 20,
**dadurch gekennzeichnet,**
**dass** bei Auslegung der Kamera (6) als Zeilenkamera unter Verwendung einer Komprimierungsstufe (17) jede vollständig empfangene, auf einen interessierenden Bereich bezogene Bildzeile unmittelbar nach deren Erfassung komprimiert wird.

22. Verfahren nach einem der Ansprüche 19 oder 20,
**dadurch gekennzeichnet,**
**dass** bei Auslegung der Kamera (6) als Zeilenkamera unter Verwendung einer Komprimierungsstufe (17) eine vorbestimmte Anzahl von empfangenen, auf einen interessierenden Bereich bezogenen Pixeln einer oder mehrerer Bildzeilen unmittelbar nach der Erfassung der genannten Anzahl von Pixeln komprimiert wird.

23. Verfahren nach einem der Ansprüche 19 oder 20,
**dadurch gekennzeichnet,**
**dass** bei Auslegung der Kamera (6) als Zeilenkamera unter Verwendung einer Komprimierungsstufe (17) eine vorbestimmte Anzahl von vollständig empfangenen, auf einen interessierenden Bereich bezogenen Bildzeilen unmittelbar nach der Erfassung der genannten Anzahl von Bildzeilen komprimiert wird.

## Claims

1. An apparatus for the detection of objects (1, 2, 3) moved through the field of view of a camera (6) comprising a device for the selection of regions of interest which are each only associated with a part of the field of view of the camera (6), wherein an evaluation circuit (9) is designed to evaluate only those image contents detected by the camera (6") which are associated with the previously determined regions of interest,
**characterized in that**
a laser scanner (5), which is designed for the determination of the distances of the object surfaces facing it and for the determination of the positions of these object surfaces, is integrated into the camera (6) or is connected upstream or downstream of it in the direction of movement (A) of the objects (1, 2, 3);
and **in that** the laser scanner (5) is coupled to the evaluation circuit (9) for the computation of the regions of interest in dependence on the distances and positions determined.

2. An apparatus in accordance with claim 1, **characterized in that** the laser scanner (5) consists of a plurality of units.

3. An apparatus in accordance with claim 2, **characterized in that** the laser scanner (5) is designed for the transmission of a laser beam moved periodically within a scan plane (7).

4. An apparatus in accordance with claim 3, **characterized in that** the scan plane (7) extends perpendicular or obliquely to the direction of movement (A) of the objects (1, 2, 3).

5. An apparatus in accordance with any one of the preceding claims, **characterized in that** the evaluation circuit (9) is designed for the computation of the regions of interest in dependence on the determined distances and on a remission behavior additionally determined by the laser scanner (5).

6. An apparatus in accordance with any one of the preceding claims, **characterized in that** the evaluation circuit (9) is designed for the taking into account of the depth of field range of the camera (6) such that only those regions of interest can be determined in which the object surface is located in the depth of field range of the camera (6).

7. An apparatus in accordance with any one of the preceding claims, **characterized in that** the camera (6) is made as a line camera or matrix camera or as a barcode scanner.

8. An apparatus in accordance any one of the preceding claims, **characterized in that** a conveying device (4), in particular a conveyor belt, is provided for the movement of the objects.

9. An apparatus in accordance with any one of the preceding claims, **characterized in that** the evaluation circuit (9) is designed for the determination of the geometry of the objects (1, 2, 3) taking place in dependence on the determined distances.

10. An apparatus in accordance with any one of the preceding claims, **characterized in that** the evaluation circuit (9) is designed for the determination of the volumes of the objects (1, 2, 3) taking place in dependence on the determined distances.

11. An apparatus in accordance with any one of the preceding claims, **characterized in that** a camera focusing device is provided which is acted on in dependence on the determined distances.

12. An apparatus in accordance with any one of the preceding claims, **characterized in that** an object illumination device is provided which can be controlled via the evaluation circuit such that regions of interest (13) are illuminated and regions not of interest are not illuminated.

13. An apparatus in accordance with any one of the preceding claims, **characterized in that** an object illumination device is provided which can be controlled via the evaluation circuit such that regions of interest (13) are illuminated more strongly than regions not of interest.

14. An apparatus in accordance with claim 12 or claim 13, **characterized in that** the light sources of the object illumination device are designed as LEDs.

15. An apparatus in accordance with any one of the preceding claims, **characterized in that** the camera (6) and/or the evaluation circuit (9) has/have a data interface (15) for the transmission of the data relating to regions of interest to an external device (16).

16. An apparatus in accordance with claim 15, **characterized in that** the external device (16) is designed for the automated decoding of characters and/or for the optical presentation of image regions with characters not decodable in an automated manner.

17. An apparatus in accordance with claim 15 or claim 16, **characterized in that** the camera (6) and/or the evaluation circuit (9) is/are equipped with a compression stage (17) for the compression of the data relating to regions of interest and to be transmitted via the data interface (15).

18. An apparatus in accordance with claim 17, **characterized in that** the compression stage (17) is designed for the compression of image data relating to regions of interest during the detection of the respective image.

19. A method for the detection of objects (1, 2, 3) moved through the visual field of a camera (6), wherein regions of interest are selected which are each only associated with a part of the visual field of the camera (6), with an evaluation device (9) only evaluating those image contents determined by the camera (6) which are associated with the previously determined regions of interest,
**characterized in that**
a laser scanner (5) determines the distances of the object surfaces facing it and determines the positions of these object surfaces, with the laser scanner (5) being integrated in the camera (6) or being connected upstream or downstream of it in the direction of movement (A) of the objects (1, 2, 3);
and **in that** the evaluation circuit (9) coupled to the laser scanner (5) computes the regions of interest in dependence on the distances and positions determined.

20. A method in accordance with claim 19, **characterized in that**, using the laser scanner (5), the remission behavior of the object surfaces facing the laser scanner (5) is additionally determined using a remission meter and subsequently the regions of interest are computed in dependence on the distances determined and on the remission behavior determined.

21. A method in accordance with claim 19 or claim 20, **characterized in that**, on the design of the camera (6) as a line camera, while using a compression stage (17), each completely received image line relating to a region of interest is compressed directly after its detection.

22. A method in accordance with claim 19 or claim 20, **characterized in that**, on the design of the camera (6) as a line camera, while using a compression stage (17), a predetermined number of received pixels relating to a region of interest of one or more image lines is compressed directly after the detection.

23. A method in accordance with claim 19 or claim 20, **characterized in that**, on the design of the camera (6) as a line camera, while using a compression stage (17), a predetermined number of completely received image lines relating to a region of interest is compressed directly after the detection of the said number of image lines.

## Revendications

1. Dispositif pour détecter des objets (1, 2, 3) en mouvement à travers le champ d'observation d'une caméra (6), comprenant des moyens pour la sélection de zones présentant un intérêt, qui sont chacune associées à une partie uniquement du champ d'observation de la caméra (6), dans lequel est prévu un circuit d'évaluation (9) conçu pour traiter uniquement celles des données image captées par la caméra (6) qui sont associés à des zones présentant un intérêt et préalablement déterminées,
**caractérisé en ce qu'**un scanner à laser (5), qui est conçu pour déterminer la distance des surfaces-objets tournées vers lui-même et pour déterminer la position de ces surfaces-objets, est intégré dans la caméra (6) ou placé devant ou derrière celle-ci dans la direction de mouvement (A) des objets (1, 2, 3),
et **en ce que** le scanner à laser (5) est couplé au circuit d'évaluation (9) pour calculer les zones présentant un intérêt en fonction des distances et des positions déterminées.

2. Dispositif selon la revendication 1,
**caractérisé en ce que** le scanner à laser (5) est constitué de plusieurs unités.

3. Dispositif selon la revendication 2,
**caractérisé en ce que** le scanner à laser (5) est conçu pour émettre un faisceau laser déplacé périodiquement à l'intérieur d'un plan de palpage (7).

4. Dispositif selon la revendication 3,
**caractérisé en ce que** le plan de palpage (7) s'étend perpendiculairement ou en oblique par rapport à la direction de mouvement (A) des objets (1, 2, 3).

5. Dispositif selon l'une des revendications précédentes,
**caractérisé en ce que** le circuit d'évaluation (9) est conçu pour calculer les zones présentant un intérêt en fonction des distances déterminées et d'un comportement de rémission déterminé additionnellement par le scanner à laser (5).

6. Dispositif selon l'une des revendications précédentes,
**caractérisé en ce que** le circuit d'évaluation (9) est conçu, pour tenir compte de la profondeur de champ de la caméra (6), de telle manière que seules celles des zones présentant un intérêt dans lesquelles la surface-objet se trouve de dans la plage de profondeur de champ de la caméra (6) peuvent être déterminées.

7. Dispositif selon l'une des revendications précédentes,
**caractérisé en ce que** la caméra (6) est réalisée comme une caméra à ligne ou à matrice, ou comme un scanner de codes à barres.

8. Dispositif selon l'une des revendications précédentes,
**caractérisé en ce qu'**il est prévu un dispositif de convoyage (4), en particulier une bande de convoyage pour le déplacement des objets.

9. Dispositif selon l'une des revendications précédentes,
**caractérisé en ce que** le circuit d'évaluation (9) est conçu en vue d'une détermination de la géométrie des objets (1, 2, 3) qui a lieu en fonction des distances déterminées.

10. Dispositif selon l'une des revendications précédentes,
**caractérisé en ce que** le circuit d'évaluation (9) est conçu en vue d'une détermination des volumes des objets (1, 2, 3) qui a lieu en fonction des distances déterminées.

11. Dispositif selon l'une des revendications précédentes, à la ligne
**caractérisé en ce qu'**il est prévu un dispositif de focalisation de caméra piloté en fonction des distances déterminées.

12. Dispositif selon l'une des revendications précédentes,
**caractérisé en ce qu'**il est prévu un dispositif d'éclairage d'objet, qui peut être piloté via le circuit d'évaluation de telle manière que les zones présentant un intérêt (13) sont éclairées et les zones ne présentant pas d'intérêt ne sont pas éclairées.

13. Dispositif selon l'une des revendications précédentes,
**caractérisé en ce qu'**il est prévu un dispositif d'éclairage d'objet, qui peut être piloté via le circuit d'évaluation de telle manière que les zones présentant un intérêt (13) sont plus fortement éclairées que les zones ne présentant pas d'intérêt.

14. Dispositif selon l'une des revendications 12 ou 13,
**caractérisé en ce que** les sources de lumière du dispositif d'éclairage d'objet sont conçues sous forme de diodes électroluminescentes.

15. Dispositif selon l'une des revendications précédentes,
**caractérisé en ce que** la caméra (6) et/ou le circuit d'évaluation (9) comprend une interface de données (15) pour la transmission à un appareil externe (16) des données qui se rapportent aux zones présentant un intérêt.

16. Dispositif selon la revendication 15,
**caractérisé en ce que** l'appareil externe (16) est conçu pour le décodage automatique de signes d'écriture et/ou pour la représentation optique de zones d'images avec des signes d'écriture qui ne peuvent pas être automatiquement décodés.

17. Dispositif selon l'une des revendications 15 ou 16,
**caractérisé en ce que** la caméra (6) et/ou le circuit d'évaluation (9) est doté d'un étage de compression (17) pour la compression des données concernant les zones présentant un intérêt qu'il s'agit de transmettre via l'interface de données (15).

18. Dispositif selon la revendication 17,
**caractérisé en ce que** l'étage de compression (17) est conçu pour comprimer les données image concernant les zones présentant un intérêt déjà pendant la saisie de l'image respective.

19. Procédé pour la détection d'objets (1, 2, 3) en mouvement à travers le champ d'observation d'une caméra (6), dans lequel on sélectionne des zones présentant un intérêt, qui sont associées respectivement seulement à une partie du champ d'observation de la caméra (6), et dans lequel il est prévu un circuit d'évaluation (9) qui traite uniquement celles des données image de la caméra (6) qui sont associés aux zones présentant un intérêt et préalablement déterminées,
**caractérisé en ce qu'**un scanner à laser (5) détermine la distance des surfaces objets tournées vers lui-même et la position de ces surfaces objets, ledit scanner à laser (5) étant intégré dans la caméra (6) ou placé devant ou derrière celle-ci dans la direction de mouvement (A) des objets (1, 2, 3), et
**en ce que** le circuit d'évaluation (9) couplé au scanner à laser (5) calcule les zones présentant un intérêt en fonction des distances et des positions déterminées.

20. Procédé selon la revendication 19,
**caractérisé en ce que**, en supplément au scanner à laser (5), on détermine avec un capteur de rémission (5) le comportement de rémission des surfaces objets tournées vers le scanner à laser (5), et l'on calcule ensuite les zones présentant un intérêt en fonction des distances déterminées et du comportement de rémission déterminé.

21. Procédé selon l'une des revendications 19 ou 20,
**caractérisé en ce que**, lorsque la caméra (6) est réalisée sous forme de caméra à lignes, et en utilisant un étage de compression (17), chaque ligne image complètement reçue et se rapportant à une zone présentant un intérêt est comprimée immédiatement après sa détection.

22. Procédé selon l'une des revendications 19 ou 20,
**caractérisé en ce que**, lorsque la caméra (6) est réalisée sous forme de caméra à lignes, et en utilisant un étage de compression (17), un nombre prédéterminé de pixels reçus se rapportant à une zone présentant un intérêt dans une ou plusieurs lignes d'image sont comprimés immédiatement après la détection du nombre de pixels concernés.

23. Procédé selon l'une des revendications 19 ou 20,
**caractérisé en ce que**, lorsque la caméra (6) est réalisée sous forme de caméra à lignes, et en utilisant un étage de compression (17), un nombre prédéterminé de lignes d'image complètement reçues et se rapportant à une zone présentant un intérêt sont comprimées immédiatement après la détection du nombre de lignes image concernées.
